Europäisches Patentamt

European Patent Office

Office européen des brevets

(11) Publication number: **0 386 643**
**A2**

# EUROPEAN PATENT APPLICATION

(21) Application number: **90104052.7**

(51) Int. Cl.5: **G02B 27/12**

(22) Date of filing: **02.03.90**

(30) Priority: **06.03.89 JP 53531/89**
**22.02.90 JP 42145/90**

(43) Date of publication of application:
**12.09.90 Bulletin 90/37**

(84) Designated Contracting States:
**DE FR GB IT**

(71) Applicant: **Kubota, Toshihiro**
**2-16-2231, Kinyahonmachi**
**Hirakata-Shi, Osaka(JP)**

Applicant: **Dainippon Screen Mfg. Co., Ltd.**
**1-1, Tenjinkitamachi Teranouchi-Agaru**
**4-chome Horikawa-Dori**
**Kamikyo-ku Kyoto 602(JP)**

(72) Inventor: **Kubota, Toshihiro**
**2-16-2231, Kinyahonmachi**
**Hirakata-shi, Osaka(JP)**

(74) Representative: **Goddar, Heinz J., Dr. et al**
**FORRESTER & BOEHMERT**
**Widenmayerstrasse 4/I**
**D-8000 München 22(DE)**

(54) **Beam splitter.**

(57) A beam splitter comprises a transparent layer (100a), a diffraction grating (200a) and an introduction member (300a) for introducing incident light ($L_{I0}$). The incident light is totally reflected in the transparent layer repeatedly. At positions of a surface of the transparent layer where the incident light is reflected, the incident light is diffracted by the diffraction grating.

FIG. 3

## Beam Splitter

### BACKGROUND OF THE INVENTION

Field of the Invention

The present invention is related to a beam splitter for producing a plurality of light beams from a single beam.

Description of the Prior Art

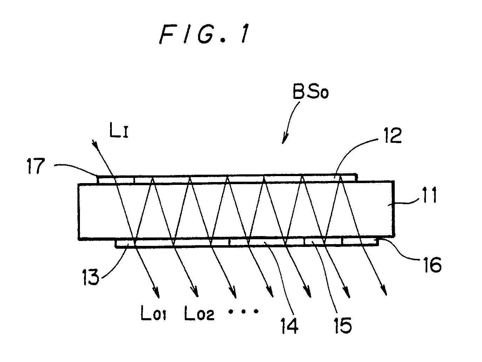

The prior art of a beam splitter for producing a plurality of light beams is described in U.S.Pat. No. 4,125,865 or Japanese Patent Laying Open Gazette No. 60-19101, for example. Fig. 1 is a sectional view of a beam splitter in the art. The beam splitter $BS_0$ comprises a transparent substrate 11, a total reflection film 12 and an anti-reflection film 17 which are formed on a surface of the substrate 11, and a plurality of semi-transparent films 13-16 formed on the other surface of the substrate 11. The semi-transparent films 13-16 have different characteristics from each other. A light beam $L_1$ is introduced in the transparent substrate 11 through the anti-reflection film 17, and parts of the light beam $L_1$ are emitted outside at the semi-transparent films 13-16 as outgoing beams $L_{01}$, $L_{02}$, ...., respectively. Thus the beam splitter $BS_0$ produces a plurality of light beams $L_{01}$, $L_{02}$, ... from a single light beam $L_1$.

The outgoing beams $L_{01}$, $L_{02}$, ... are often desired to have an intensity equal to each other. In order to attain this, the semi-transparent films 13-16 are so formed that their transmission factors increase in that order. For example, as described in the Japanese Patent Laying Open Gazette No.60-19101, the semi-transparent films 13-16 are formed as multi-layers, respectively, where the number of layers decreases in order. Such a kind of semi-transparent films can be formed through deposition of $TiO_2$ or $SiO_2$. However, the thickness of each layer should be precisely controlled to attain desired transmission factors; this requires much time and cost for fabrication.

### SUMMARY OF THE INVENTION

The present invention is directed to a beam splitter comprising: a transparent layer, an introduction member for introducing a light beam into the transparent layer, the light beam being totally reflected in the transparent layer, and a diffraction grating formed on at least a part of a surface of the transparent layer, at which part the light beam is totally reflected, the diffraction grating diffracting the light beam to produce a plurality of diffracted beams going out of the transparent layer. The transparent layer may have a first flat surface on which the diffraction grating is formed and a second flat surface which is parallel to the first flat surface.

According to an aspect of the present invention, the introduction member is a prism of a triangle pole attached to the transparent layer.

According to another aspect of the present invention, the beam splitter comprises another diffraction grating formed on at least a part of the second flat surface, at which part the light beam is totally reflected.

According to still another aspect of the present invention, the beam splitter comprises a reflecting layer formed on at least a part of the second flat surface where the plurality of diffracted beams are to pass through.

According to another aspect of the present invention, the light beam is reflected and diffracted at a plural positions of the first flat surface, and a grating constant of the diffraction grating differs at respective plural positions of the first flat surface. The grating constant may be so arranged that intensity values of the diffracted beams produced at respective plural positions of the first flat surface are equal to each other.

According to still another aspect of the present invention, the beam splitter comprises an element for contolling propagation of the diffracted beam fixed on at least a part of the second flat surface where the plurality of diffracted beams are to pass through. The element may be a liquid christal element.

According to another aspect of the present invention, the diffraction grating is integrated with the transparent layer.

According to still another aspect of the present invention, the introduction member is integrated with the transparent layer and, the light beam is incident perpendicularly on a third flat surface of the transparent layer which is inclined to the first and second flat surfaces.

According to another aspect of the present invention, the transparent layer has a flat surface on which the diffraction grating is formed, and a stepwise surface each step of which is parallel to the flat surface.

According to still another aspect of the present invention, the transparent layer has a first flat surface on which the diffraction grating is formed, and a second flat surface inclined to the first flat surface.

According to another aspect of the present invention, the transparent layer has a flat surface on which the diffraction grating is formed and a curved surface opposite to the flat surface, where curvature of the curved surface is so established that diffracted beams emitted outside from the diffraction grating converge at a point.

The present invention is also directed to a beam splitting system comprising: a first beam splitter comprising: a first transparent layer, a first introduction member for introducing a light beam into the first transparent layer, the light beam being totally reflected in the first transparent layer, and a first diffraction grating formed on at least a part of a surface of the first transparent layer, at which part the light beam is totally reflected, the first diffraction grating diffracting the light beam to produce first diffracted beams parallel to each other, which are lined up and which go out of the first transparent layer; and a second beam splitter comprising: a second transparent layer, a second introduction member for introducing the first diffracted beams into the second transparent layer, the first diffracted beams being totally reflected in the second transparent layer, and a second diffraction grating formed on at least a part of a surface of the second transparent layer, at which part the first diffracted beams are totally reflected, the second diffraction grating diffracting the first diffracted beams to produce second diffracted beams parallel to each other, which are arrayed in a manner of lattice points of a two-dimensional lattice and which go out of the second transparent layer.

Incidentally, the first flat surface of the transparent layer may be formed into the diffraction grating. An end portion of the transparent layer may be formed into the introduction member, and the light beam may be incident on a third flat surface of the end portion which is inclined to the first and second flat surfaces.

Accordingly, an object of the present invention is to provide a beam splitter which can be easily fabricated.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a sectional view showing a beam splitter of the prior art;

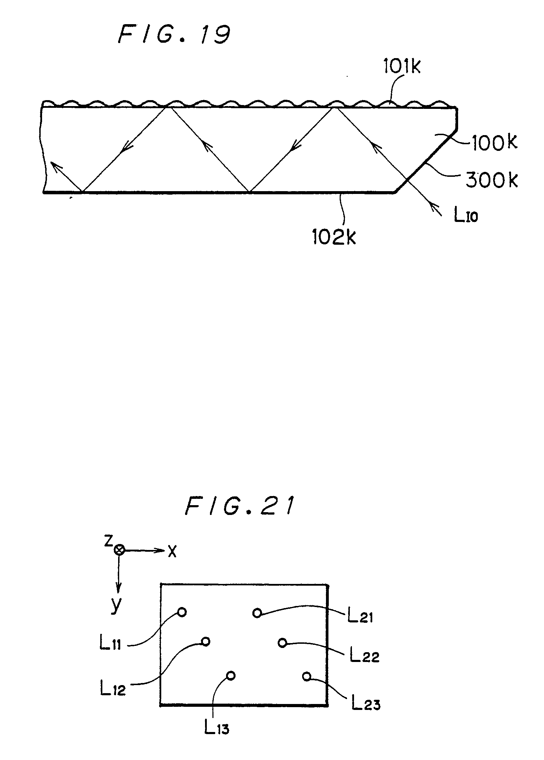

Figs. 2, 3, 5, 6, 9 through 11, 13 through 15, 17, and 19 are sectional views showing beam splitters according to the present invention;

Figs. 4 and 12 are schematic views showing methods of forming a diffraction grating;

Fig. 7 is a perspective view of a beam splitting system according to the present invention;

Figs. 8A and 8B are schematic diagrams showing arrays of multibeams produced with the beam splitting system;

Fig. 16 and 18 are diagrams showing light paths in the vicinity of a surface of a transparent substrate;

Figs. 20A and 20B are a plan view and a front view, respectively, showing an optical system utilizing multibeams produced with the beam splitting system;

Fig. 21 is a diagram showing an array of the multibeams utilized in the optical system;

Fig. 22 is a schematic block diagram showing the structure of a shape identifying apparatus provided with the beam splitting system; and

Figs. 23A and 23B are diagrams showing arrays of emitting beams and received beams, respectively, in the shape identifying apparatus.

DESCRIPTION OF THE PREFERRED EMBODIMENTS

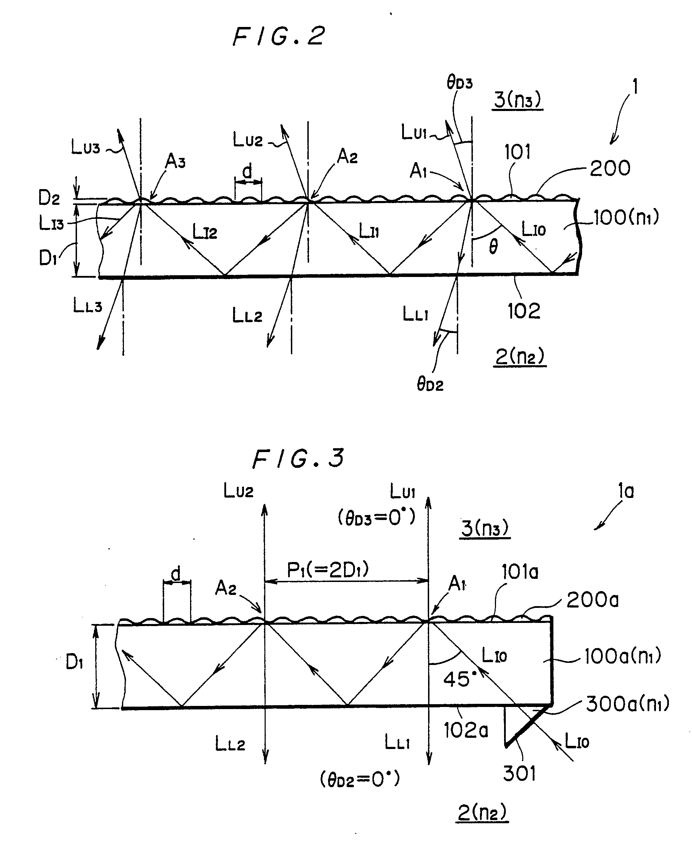

Fig. 2 is a sectional view of a part of a beam splitter constructed as an embodiment of the present invention. The beam splitter 1 comprises a transparent substrate 100 having parallel surfaces 101 and 102, and a diffraction grating 200 formed on the upper surface 101. A thickness $D_2$ of the diffraction grating 200, a few hundred nanometers for example, is very small compared to a thickness $D_1$ of the substrate 100, which is 1 mm for example. The size of the diffraction grating is exaggerated for convenience of illustration.

An incident beam $L_{l0}$ repeats total reflection in the substrate 100 under the following conditions, which are the same as total reflection in a transparent slab without a diffraction grating:

$$\theta > \sin^{-1}(n_2/n_1) \qquad (1a)$$

and $\theta > \sin^{-1}(n_3/n_1) \qquad (1b)$

where $\theta$ denotes a reflection angle and $n_1$, $n_2$ and $n_3$ denote refractive indexes of the substrate 100, a medium 2 under the substrate 100, and a medium 3 over the substrate 100, respectively.

If the above conditions are met, the incident beam $L_{l0}$ repeats total reflection between the upper surface 101 and the lower surface 102, and transmits as internal reflected beams $L_{l1}$, $L_{l2}$, $L_{l3}$, ... in the substrate 100. At each position of the boundary between the diffraction grating 200 and the substrate 100 where the internal beam is reflected, the internal beam is diffracted by the diffraction grating 200, whereby diffracted beams are emitted out of the substrate 100. For example, primary diffracted beams $L_{L1}$ and $L_{U2}$ are produced at the first total-

reflection position $A_1$ and emitted to the media 2 and 3, respectively. A diffraction angle $\theta_{D3}$ of the upper diffracted beam $L_{U1}$ is found by the following grating equation:

$$\beta - \beta_D = 2\pi/d \qquad (2)$$
$$\beta = (2\pi/\lambda_C)n_1\sin\theta \qquad (3)$$
$$\beta_D = (2\pi/\lambda_C)n_3\sin\theta_{D3} \qquad (4)$$

where d denotes a grating constant of the diffraction grating 200 and $\lambda_C$ denotes a wavelength of the incident beam $L_{I0}$ in the air.

The lower diffracted beam $L_{L1}$ passes through the substrate 100 and goes outside into the medium 2 after being refracted at the lower surface 102. A refraction angle $\theta_{D2}$ of the lower diffracted beam $L_{L1}$ satisfies the following equation:

$$n_2\sin\theta_{D2} = n_3\sin\theta_{D3} \qquad (5)$$

Incidentally, the word "total reflection" in this specification means a phenomenon which satisfies the conditions (1a) and (1b), including one that is accompanied with diffracted beams produced by a diffraction grating.

As described above, the transparent substrate 100 having the diffraction grating 200 on its surface 101 functions as a beam splitter which diffracts the incident light $L_{I0}$ to produce two diffracted beams $L_{L1}$ and $L_{U2}$ as outgoing light.

The rest of the incident light $L_{I0}$ other than the diffracted beams is totally reflected at the total reflection position $A_1$ to become the internal reflected beam $L_{I1}$. If intensity of high-order diffracted ·light is negligible, intensity values $I_{I0}$ and $I_{I1}$ of the beams $L_{I0}$ and $L_{I1}$, respectively, hold the following equation:

$$I_{I0} = I_{I1} + I_{L1} + I_{U1} \qquad (6)$$

The equation (6) can be rewritten with diffraction efficiency $\eta_1$ as follows:

$$I_{I1} = I_{I0}(1 - \eta_1) \qquad (7)$$
$$\eta_1 = \eta_{U1} + \eta_{L1} \qquad (8a)$$
$$\eta_{U1} = I_{U1}/I_{I0} \qquad (8b)$$
$$\eta_{L1} = I_{L1}I_{I0} \qquad (8c)$$

The diffraction efficiency values $\eta_{U1}$ and $\eta_{L1}$ mainly depend on a depth of grooves of the diffraction grating 200.

The equation (6) shows that the intensity of the internal reflected beam decreases by the intensity values of the diffracted beams. Therefore, the intensity values of internal reflected beams $L_{I1}$, $L_{I2}$, and $L_{I3}$, which are reflected at total reflection positions $A_1$, $A_2$ and $A_3$, respectively, decrease in this order in the manner of geometric progression:

$$I_{I2} = I_{I1}(1 - \eta_1) = I_{I0}(1 - \eta_1)^2 \qquad (9)$$
$$I_{I3} = I_{I2}(1 - \eta_1) = I_{I0}(1 - \eta_1)^3 \qquad (10)$$

Intensity values of upper diffracted beams $L_{U1}$, $L_{U2}$, and $L_{U3}$, which are diffracted at the total reflection positions $A_1$, $A_2$, and $A_3$, respectively, and those of lower diffracted beams $L_{L1}$, $L_{L2}$ and $L_{L3}$ also decrease in the same manner as follows:

$$I_{L1} = I_{I0} \cdot \eta_{L1} \qquad (11)$$

$$I_{L2} = I_{I1} \cdot \eta_{L1} = I_{I0}(1 - \eta_1) \cdot \alpha\mu\rho - \eta_{L1} \qquad (12)$$
$$I_{L3} = I_{I2} \cdot \eta_{L1} = I_{I0}(1 - \eta_1)^2 \cdot \alpha\mu\rho - \eta_{L1} \qquad (13)$$
$$I_{U1} = I_{I0} \cdot \eta_{U1} \qquad (14)$$
$$I_{U2} = I_{I0}(1 - \eta_1) \cdot \eta_{U1} \qquad (15)$$
$$I_{U3} = I_{I0}(1 - \eta_1)^2 \cdot \eta_{U1} \qquad (16)$$

The upper diffracted beams $L_{U1}$, $L_{U2}$, and $L_{U3}$ go out from the substrate 100 at the same angle $\theta_{D3}$ to the normal line of the upper surface 101. The lower diffracted beams $L_{L1}$, $L_{L2}$, and $L_{L3}$ also go out at the same angle $\theta_{D2}$ to the normal line of the lower surface 102.

Thus, the beam splitter 1 produces parallel beams $L_{U1}$, $L_{U2}$, and $L_{U3}$ going into the upper medium 3, intensity values of which beams decrease in the manner of geometric progression, while also producing similar parallel beams $L_{L1}$, $L_{L2}$, $L_{L3}$ going into the lower medium 2. Since the incident light $L_{I0}$ and internal reflected beams $L_{I1}$, $L_{I2}$, ... are totally reflected inside of the substrate 100, this beam splitter 1 sustains no loss in the quantity of the light beams other than the loss due to the diffraction. Therefore the beam splitter 1 has a high efficiency of utilizing the incident light $L_{I0}$.

Fig. 3 is a sectional view of a beam splitter 1a as a first embodiment of the present invention, which comprises a prism 301 of a triangle pole for introducing incident light into a substrate. The beam splitter 1a comprises a transparent substrate 100a made of glass having parallel surfaces 101a and 102a, and a diffraction grating 200a formed on the upper surface 101a. The prism 300a is fixed on a part of the lower surface 102a with an index matching liquid or a transparent adhesive agent therebetween. The lower and upper media 2 and 3 are the air.

This beam splitter 1a is so formed that the angles $D_3$ and $D_2$ of the diffracted beams $L_{U1}$ and $L_{L1}$, respectively, become zero degrees, as described below. The angles $D_3$ and $D_2$ and the grating constant d hold the equations (2)-(4). Therefore the grating constant d is given as follows:

$$d = \lambda_C/(n_1\sin\theta - n_3\sin\theta_{D3}) \qquad (17)$$

In order to find the grating constant d which makes the angles $D_3$ and $D_2$ zero degrees, the following values are assumed: $n_1 = 1.5$ (for glass) (18a)

$$n_2 = n_3 = 1.0 \text{ (for air)} \qquad (18b)$$
$$\theta = 45° \qquad (18c)$$
$$\theta_{D3} = 0° \qquad (18d)$$
$$\lambda_C = 632.8 \text{ nm (for He-Ne laser)} \qquad (18e)$$

By substrating the values of the expressions (18a)-(18e) into the equation (17), the grating constant d is found to be 0.597 $\mu$m.

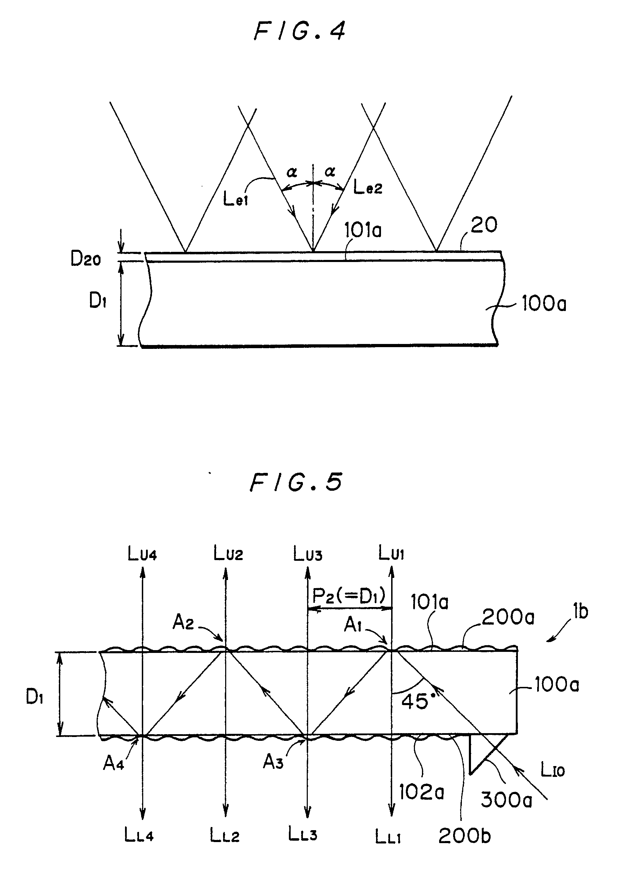

Fig. 4 is a schematic view showing a method of fabricating the diffraction grating 200a. First, photoresist 20 of a uniform thickness $D_{20}$ of about a few hundred nanometers is coated on the upper surface 101a of the substrate 100a. Second, two collimated homogeneous laser beams $L_{e1}$ and $L_{e2}$, which are divided from a single laser beam, are incident on the photoresist 20 at the same incident angle from opposite sides to each other, thereby exposing the photoresist 20. The two homogeneous beams $L_{e1}$ and $L_{e2}$ interfere with each other to produce interference fringes of minute lines on the photoresist 20. Finally, the photoresist 20 is developed to become the diffraction grating 200a having grooves of a constant pitch. The grating constant $d$ of the diffraction grating 200a is expressed with a wavelength $\lambda_0$ of homogeneous beams $L_{e1}$ and $L_{e2}$ and their incident angle $\alpha$ as follows:

$$d = \lambda_0/(2\sin\alpha) \qquad (19)$$

Assuming that the wavelength $\lambda_0$ is 457.9 nm, the incident angle $\alpha$ is set to be 22.6 degrees to produce the diffraction grating 200a having the grating constant $d$ of 0.597 $\mu$m. The method of fabricating a diffraction grating with photoresist and laser beams facilitates duplication of the diffraction grating and therefore its mass production. This method reduces fabrication cost of the diffraction grating accordingly. Detail of the duplication method is described in Fujio Iwata, "Replication of Hologram," Kogaku(Optics), Vol. 17, No. 7, pp.328-332, July 1988, for example.

The prism 300a is attached to the lower surface 102a of the substrate 100a to introduce the incident light $L_{l0}$. The prism 300a is made of the same glass as the substrate 100a and its receiving surface 301 is inclined 45 degrees away from the lower surface 102a. If the incident light $L_{l0}$ is incident perpendicularly to the receiving surface 301, the incident light $L_{l0}$ goes into the substrate 100a without being refracted at the lower surface 102a. Then the light $L_{l0}$ is reflected totally except the diffraction inside the substrate 100a.

The incident angle $\theta$ of the light $L_{l0}$ into the substrate 100a is set to be 45 degrees so that it satisfies the following condition for total reflection, which is derived from the expressions (1a), (1b), (18a) and (18b):

$$\theta > \sin^{-1}(n_2/n_1) = 41.8°$$

That is, if the incident light $L_{l0}$ is introduced at the angle of 45 degrees, it repeats total reflection in the substrate 100a. At the first total-reflection position $A_1$, the diffracted beams $L_{U1}$ and $L_{L1}$ are emitted normal to the upper surface 101a and the lower surface 102a, respectively. Similarly, two diffracted beams $L_{U2}$ and $L_{L2}$ are emitted outside at the second total-reflection position $A_2$. Since the incident angle $\theta$ is 45 degrees and the thickness $D_1$ of the substrate 100a is 1 mm, a distance $P_1$ between the diffracted beams $L_{U1}$ and $L_{U2}$ is twice the thickness $D_1$, that is, 2 mm. Thus, the beam splitter 1a produces from a single incident beam $L_{l0}$

two sets of parallel beams $L_{U1}$, $L_{U2}$, ... and $L_{L1}$, $L_{L2}$, ... which are normal to the surfaces 101a and 102a, respectively, and which have the same distance $P_1$ (2 mm) between each pair of beams.

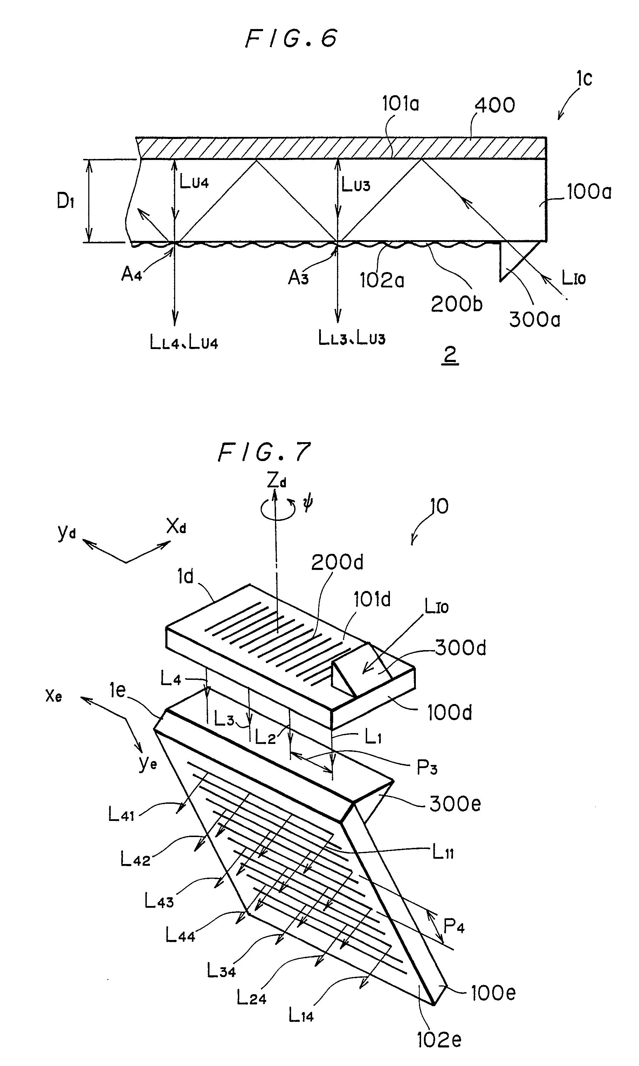

Fig. 5 is a sectional view of a second embodiment of the present invention. The beam splitter 1b comprises a diffraction grating 200b formed on the lower surface 102a of the substrate 100a in addition to the diffraction grating 200a on the upper surface 101a. When the incident light $L_{l0}$ is introduced into the beam splitter 1b at the incident angle of 45 degrees, diffraction occurs not only at the total-reflection positions $A_1$ and $A_2$ on the upper surface 101a but also at total-reflection positions $A_3$ and $A_4$ on the lower surface 102a. Consequently upper diffraction beams $L_{U1}$-$L_{U4}$ are emitted parallel at an interval $P_2$ which is equal to the thickness $D_1$ of the substrate 100a. Lower diffraction beams $L_{L1}$-$L_{L4}$ are emitted in the same manner.

The beam splitter 1b shown in Fig. 5 may be fabricated by firstly preparing two substrates 100a with the diffraction grating 200a on one surface 101a and by secondly pasting them together at the other surface 102a.

Fig. 6 is a sectional view of a third embodiment of the present invention. A beam splitter 1c comprises the substrate 100a, the diffraction grating 200b formed on the lower surface 102a, the prism 300a fixed on the lower surface 101a, and further a metal film 400 having high reflectance formed on the upper surface 101a of the substrate 100a. In this beam splitter 1c, the upper diffracted beams $L_{U3}$ and $L_{U4}$, which are emitted outside at the total-reflection positions $A_3$ and $A_4$ on the lower surface 102a, are reflected at the metal film 400 perpendicularly, thereby going out downward together with the lower diffracted beams $L_{L3}$ and $L_{L4}$. Thus the beam splitter 1c can produce light beams which goes in one direction (downward in Fig. 6) and whose intensity values are higher than those of the beam splitters 1a and 1b. If twice the thickness $D_1$ of the substrate 100a, that is, $2D_1$ multiplied by its refraction index $n$ is equal to the wavelength $\lambda_0$ of the incident light $L_{l0}$ multiplied by an integer, the outgoing beams of the beam splitter 1c is about four times as intense as those of the beam splitters 1a and 1b.

Fig. 7 is a perspective view of a beam splitting system 10 as a fourth embodiment of the present invention. The beam splitting system 10 comprises two beam splitters 1d and 1e. When incident light $L_{l0}$ is incident on a prism 300d of the first beam splitter 1d, diffracted beams $L_1$-$L_4$ are emitted parallel to each other at an interval $P_3$ from the lower surface of a substrate 100d. A diffraction grating 200d of the beam splitter 1d is illustrated as parallel lines on the upper surface 101d of the substrate 100d. The outgoing beams $L_1$-$L_4$ are incident

on a prism 300e of the second beam splitter 1e. Consequently, the second beam splitter 1e produces diffracted beams $L_{11}$-$L_{44}$ which are arranged two-dimensionally and which go outside parallel from its lower surface 102e.

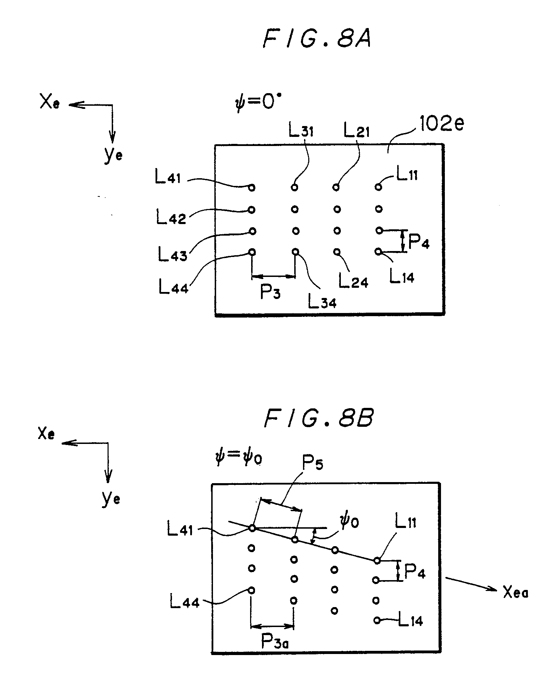

Fig. 8A is a schematic view showing two-dimensional arrangement of the outgoing beams $L_{11}$-$L_{44}$, viewed from the lower side of the lower-surface 102e of the substrate 100e. the four parallel beams $L_1$-$L_4$ emitted from the first beam splitter 1d at the interval $P_3$ become four sets of parallel beams $L_{11}$-$L_{14}$, $L_{21}$-$L_{24}$, $L_{31}$-$L_{34}$, and $L_{41}$-$L_{44}$, respectively, each of which four sets has an interval $P_4$ between each pair of beams. Supposing that $x_e$-$y_e$ coordinates are defined on the lower surface 102e of the substrate 100e, the outgoing beams $L_{11}$-$L_{44}$ are arranged in a manner of lattice points of a rectangular lattice having pitches $P_3$ and $P_4$ in the directions $X_e$ and $y_e$, respectively.

A relative angle of the first beam splitter 1d to the second beams splitter 1e is defined to be zero degrees when they are arranged as shown in Figs. 7 and 8A. The first beam splitter 1d and the incident light $L_{I0}$ can be rotated in a direction around an axis $z_d$ which is perpendicular to an $x_d$-$y_d$ plane, or the upper surface 101d of the substrate 100d. When the value of the relative angle is $_0$, the arrangement of the outgoing beams $L_{11}$-$L_{44}$ becomes as shown in Fig. 8B. The four beams $L_{11}$-$L_{41}$, which are lined up in the direction $x_e$ in Fig. 8A, are arranged in Fig. 8B in a direction $x_{ea}$ inclined at the angle $_0$ clockwise to the direction $X_e$. While the pitch $P_4$ is maintained, a pitch $P_{3a}$ in the direction $x_e$ is given as follows:

$$P_{3a} = P_3 \cos {}_0 \quad (20)$$

Meanwhile, a pitch $P_5$ in the direction $x_{ea}$ in Fig. 8B is equal to the pitch $P_3$ in the direction $x_e$ in Fig. 8A.

As described above, the beam splitting system 10, comprising two beam splitters 1d and 1e arranged three-dimensionally, produces from a single incident beam $L_{I0}$ a plurality of parallel beams $L_{11}$-$L_{44}$ distributed two-dimensionally and regularly. Each of the beam splitters 1d and 1e may be one such as the beam splitter 1a or 1b shown in Fig. 3 or 5 which emits beams in two opposite directions, or such as the beam splitter 1c shown in Fig. 6 emitting beams in one direction.

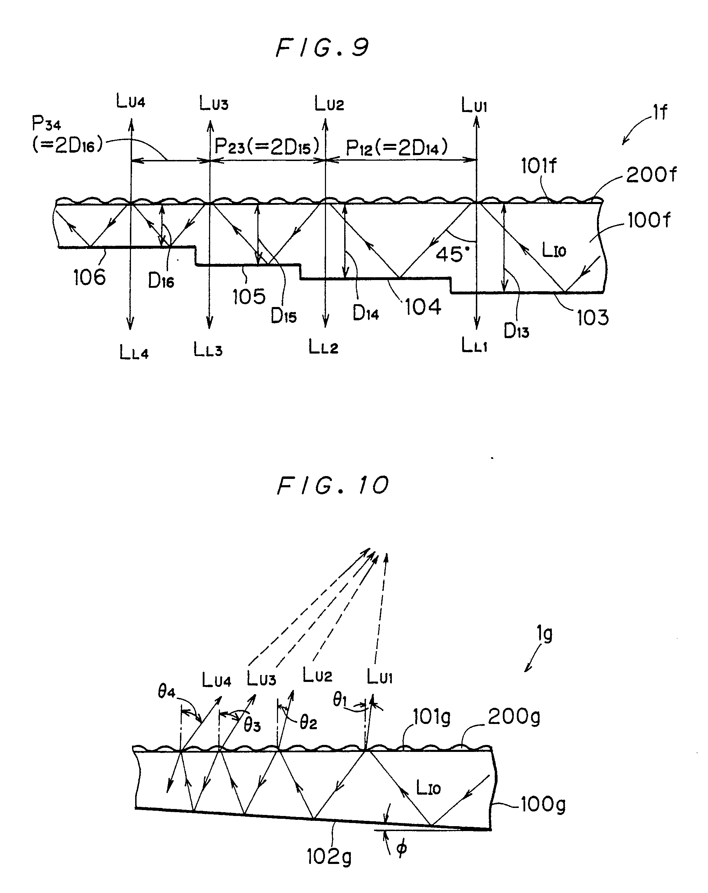

Fig. 9 is a sectional view of a fifth embodiment of the present invention. Although an upper surface 101f of a transparent substrate 100f is flat, its lower surface has a stepwise shape having step portions 103-106. Thicknesses $D_{13}$-$D_{16}$ of the substrate 100f at the step portions 103-106, respectively, decrease in this order. Each of the step portions 103-106 is parallel to the upper surface 101f. Further, a diffraction granting 200f is formed on the upper surface 101f.

If incident light $L_{I0}$ is introduced in the beam splitter 1f at an incident angle of 45 degrees, upper diffracted beams $L_{U1}$-$L_{U4}$ and lower diffracted beams $L_{L1}$-$L_{L4}$ are emitted perpendicular to the upper surface 101f. Intervals $P_{12}$, $P_{23}$ and $P_{34}$ between each pair of the upper diffracted beams $L_{U1}$-$L_{U4}$ are equal to $2D_{14}$, $2D_{15}$ and $2D_{16}$, respectively, which decrease in this order. The intervals of the beams $L_{U1}$-$L_{U4}$ and $L_{L1}$-$L_{L4}$ can be adjusted to have desired values by changing the thicknesses $D_{13}$-$D_{16}$.

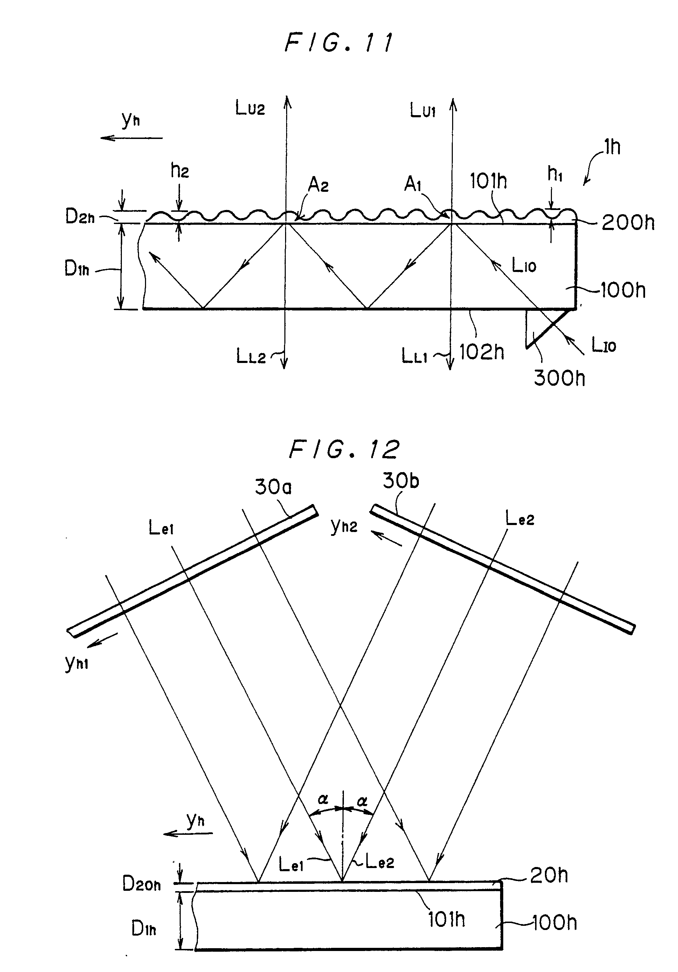

Fig. 10 is a sectional view of a sixth embodiment of the present invention. This beam splitter 1g comprises a transparent substrate 100g having an upper surface 101g and a lower surface 102g which are not parallel but inclined at an angle $\phi$ to each other. A diffraction grating 200g is formed on the upper surface 101g. Incident light $L_{I0}$ is splitted in the beam splitter 1g into a plurality of outgoing beams $L_{U1}$-$L_{U4}$ which are not parallel to each other. Angles $\theta_1$-$\theta_4$ of the beams $L_{U1}$-$L_{U4}$ to a normal line of the upper surface 101g increase in this order, and pitches between these beams are different from each other. Incidentally, the lower surface 102g may be formed to be a curved one. If the lower surface of the substrate 100g is a curved aspheric surface, the beams $L_{U1}$-$L_{U4}$ can be collected at a certain distant point. Incidentally, lower diffracted beams, which are also emitted outside, are not illustrated in Fig. 10.

According to the first through sixth embodiments of the present invention, the intensity values of the outgoing beams $L_{U1}$, $L_{U2}$,... decrease in a manner of geometrical precession. Fig. 11 illustrates a beam splitter 1h as a seventh embodiment of the present invention, which emits beams $L_{U1}$, $L_{U2}$, ... having an intensity value equal to each other. The beam splitter 1h comprises a transparent substrate 100h, a diffraction grating 200h formed on an upper surface 101h of the substrate, and a prism 300h fixed on the lower surface 102h of the substrate. The structure of the diffraction grating 300h is different from that of the beam splitter 1a shown in Fig. 3. The diffraction grating 300h has grooves whose depths $h_1$, $h_2$, ... increase in a direction $y_h$, or a direction in which the incident light and internal reflected beams transmits. In general, diffraction efficiency rises as the depth of the grooves increases in a certain range. Diffraction efficiency $\eta_1$ at the first total-reflection position $A_1$ is therefore higher than diffraction efficiency $\eta_2$ at the second total-reflection position $A_2$. Intensity values $I_{U1}$ and $I_{U2}$ of the upper diffraction beams $L_{U1}$ and $L_{U2}$ are given as follows:

$$I_{U1} = I_{I0} \cdot \eta_{U1} \quad (21)$$
$$I_{U2} = I_{I0} (1 - \eta_1) \cdot \eta_{U2} \quad (22)$$

where the total diffraction efficiency $\eta_1$ is defined by the equations (8a) through (8c).

The right hand sides of the equations (21) and (22) are made equal to each other to make the intensity values $I_{U1}$ and $I_{U2}$ equal to each other. In order to make intensity values of the upper diffracted beams $L_{U1}$, $L_{U2}$, ... , $L_{Ui}$ equal to each other, the diffraction efficiency values $\eta_{U1}$, $\eta_{U2}$, ..., $\eta_{Ui}$ hold the following relationship:

$$\eta_{Uj} = \eta_{Uj-1}/(1 - \eta_{j-1}) \qquad (23)$$

where j is an integer ranging from 2 to i.

If the diffraction efficiency values $\eta_{U1}$ and $\eta_{L1}$ are 0.10 and 0.09, respectively, the total diffraction efficiency $\eta_1$ becomes 0.19 and the diffraction efficiency $\eta_{U2}$ is found to be about 0.123 according to the equation (23). These values can be attained by adjusting the depths of the grooves of the diffraction grating 300h.

Fig. 12 schematically illustrates a method of fabricating the diffraction grating 300h. First, photoresist 20h is coated in a uniform thickness on the upper surface 101h of the substrate 100h. Second, in the same manner as Fig. 4, two homogeneous light beams $L_{e1}$ and $L_{e2}$ are incident on the photoresist 20h at a same incident angle from opposite sides to each other. In Fig. 12, two ND filters (or Neutral Density filters) 30a and 30b are inserted between light sources and the photoresist 20h. Transmissivity of the ND filters 30a and 30b increases in directions $y_{h1}$ and $y_{h2}$ shown in Fig. 12, respectively, and exposure of the photoresist 20h increases in the direction $y_h$ accordingly. As a result, the diffraction grating 300h having grooves whose depth increases continuously is formed on the substrate 100h. Incidentally, a thickness $D_{2h}$ of the diffraction grating 200h and a thickness $D_{20h}$ of the photoresist 20h in Figs. 11 and 12 are exaggerated. Actually, these thicknesses are very much smaller than a thickness $D_{1h}$ of the substrate 100h.

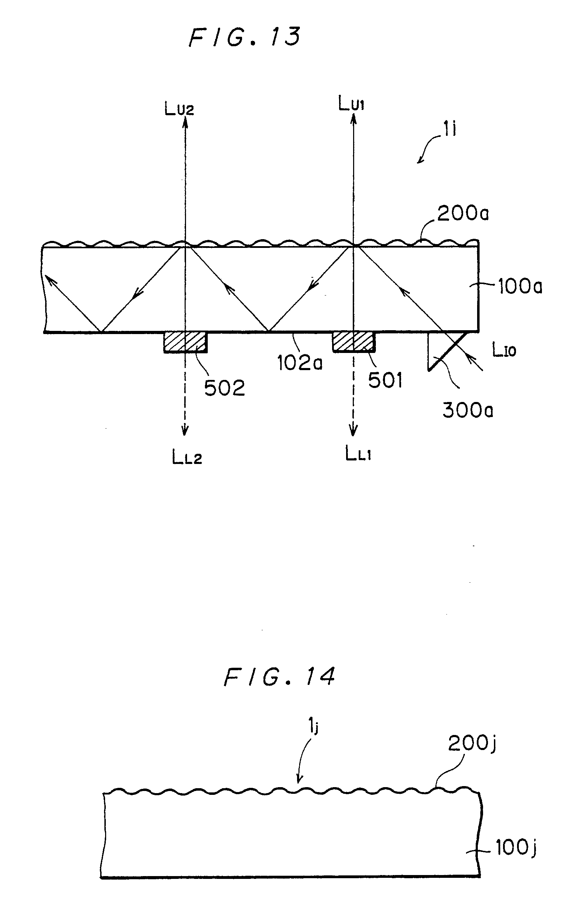

A beam splitter according to the present invention may be provided with elements having various functions. Fig. 13 is a sectional view of a beam splitter 1i provided with liquid crystal elements. The beam splitter 1i is fabricated from the beam splitter 1a shown in Fig, 2 by attaching liquid crystal elements 501 an 502 on the lower surface 102a of the substrate 100a. The liquid crystal elements 501 and 502 are placed at respective positions where the lower diffracted beams $L_{L1}$ and $L_{L2}$ are to pass through, respectively. The lower diffracted beams $L_{L1}$ and $L_{L2}$ are ON/OFF controlled by changing voltage given to the liquid crystal elements 501 and 502.

The liquid crystal elements 501 and 502 may be of a twist-nematic type provided with a polarizing plate. A polarization plane of the twist-nematic polarizing plate can be rotated by adjusting the voltage level given thereto, and the lower diffracted beams can be modulated accordingly.

Instead of the liquid crystal elements, lithium niobate (or $LiNbO_3$) may be attached on the lower surface 100a, with a metal film having high reflectivity formed on a lower surface of the lithium niobate. A refractive index of lithium niobate depends on a voltage level given thereto. An optical path length of the lower diffracted beam, which is reflected by the metal film and emitted upward with the upper diffracted beam, is therefore changeable by adjusting the voltage level. Thus the magnitude of interference between the upper diffracted beam and the lower diffracted beam is changed by controlling the voltage level, and the outgoing beam emitted upward from the beam splitter 1i is modulated accordingly. Other function elements besides the liquid crystal and lithium niobate are also applicable to a beam splitter according to the present invention.

The diffraction grating can be formed by directly processing a surface of a transparent substrate through holography, instead of exposing photoresist coated on the substrate. Fig. 14 is a sectional view of a beam splitter 1j thus fabricated. A substrate 100j is integral with a diffraction grating 200j, and there exists no boundary between them. However, this beam splitter 1j operates in the same manner as the other embodiments.

Following methods of processing a surface of the substrate 100j can be used to form the diffraction grating 200j, for example.

A first method is according to photolithography, comprising the steps of coating photoresist on a surface of the substrate 100j, exposing the photoresist to thereby make interference fringes of minute lines in the photoresist, developing the photoresist, and etching the surface of the substrate 100j while using the photoresist as a mask.

A second method comprises the steps of coating photoresist on a suitable slab other than the substrate 100j, exposing and developing the photoresist to make a wave-like shape, vapor-depositing gold or the like on the photoresist, plating metal such as nickel on the photoresist, and embossing the substrate 100j while using the slab with nickel plating as a metallic mold to thereby form the diffraction grating 200j on the surface of the substrate 100j. In this case, the substrate 100j is thermoplastic as well as transparent.

According to a third method, a surface of a substrate is processed so that refractive index on the processed surface changes in a manner of a striped pattern, instead of making the diffraction grating of a wave-like shape. The refractive index can be changed by preparing the the substrate 100j made of multicomponent glass, and exchanging some components such as Na and/or K, which are included as modified oxides, with other ions supplied from outside.

The substrate can be made of any transparent material other than glass, and it is not necessarily a structural element. In other words, the substrate can be any layer in which incident light can be totally reflected repeatedly.

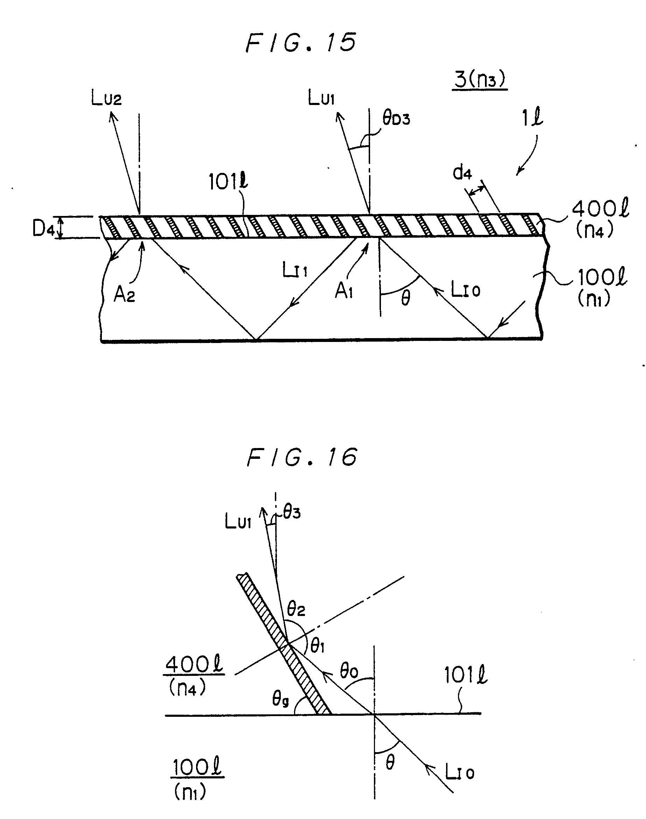

A diffraction grating of a three dimensional hologram may by used in place of that of a two dimensional hologram used in the above embodiments. Fig. 15 is a sectional view showing a beam splitter $1\ell$ having a diffraction grating of a three dimensional hologram. The beam splitter $1\ell$ comprises a transparent substrate $100\ell$ and a diffraction grating layer $400\ell$ formed on an upper surface $101\ell$ of the transparent substrate $100\ell$. Fig. 15 schematically shows refractive index distribution in the diffraction grating layer $400\ell$. Shaded portions in the figure have a comparatively high refractive index and blank portions have a comparatively low refractive index. This kind of the diffraction grating layer $400\ell$ is fabricated by coating photosensitive material, such as photopolymer, bicromate gelatin, or emulsion, on the transparent substrate $100\ell$, and exposing the photosensitive material with laser beams to form interference fringes.

The beam splitter $1\ell$ is of a transmission type. The incident light $L_{I0}$ introduced in the transparent substrate $100\ell$ is diffracted by the interference fringes in the diffraction grating layer $400\ell$, and thereby an upper diffracted beam $L_{U1}$ is emitted upwardly. Meanwhile, the rest of the incident beam $L_{I0}$ is totally reflected by a surface of the deffraction grating layer $400\ell$, and propagates in the transparent layer $100\ell$. The following equation is a discriminant for the types of holograms (a two dimensional hologram or a three dimensional hologram):

$$Q = 2\pi\lambda D_4/(n_4 d_4{}^2) \quad (24)$$

where $n_4$ is a refractive index of the material of the diffraction grating layer $400\ell$, $D_4$ is a thickness of the diffraction grating layer $400\ell$, $d_4$ is an interval of the interference fringes in the diffraction grating layer $400\ell$, and $\lambda$ is a wavelength of light in the air ($=0.6328$ $\mu$m). It is known that the parameter Q is generally no less than ten for the three dimensional hologram. If the parameter Q in the eqaiton (24) is no less than ten, the beam splitter $1\ell$ emits a diffracted beam ($L_{U1}$) only upwardly (or from the transparent substrate $100\ell$ to the side of the diffraction grating layer $400\ell$).

Fig. 16 schematically illustrates a light path in the vicinity of the surface $101\ell$. the following equations hold according to the Snell's law with respect to Figs. 15 and 16:

$$n_1 \sin\theta = n_4 \sin\theta_0 \quad (25)$$
$$n_3 \sin\theta_{D3} = n_4 \sin\theta_3 \quad (26)$$

where $\theta_0$ is a refraction angle at the surface $101\ell$, $\theta_1$ is an incident angle of the incident beam to a normal of the interference fringes, $\theta_2$ is a diffraction angle of a diffracted beam to the normal of the

interference fringes, and $\theta_3$ is an angle between the diffracted beam in the diffraction grating layer $400\ell$ and a normal of the suface $101\ell$.

Moreover, the following equations hold:

$$\theta_1 = \theta_2 \quad (27)$$
$$\theta_0 = 180° - (\theta_1 + \theta_g) \quad (28)$$
$$\theta_3 = \theta_1 - \theta_g \quad (29)$$

where $\theta_g$ is an angle between the surface $101\ell$ and the interference fringes.

Incidentally, it is assumed that $n_1 = 1.5$, $n_2 = n_3 = 1.0$, and $n_4 = 1.6$ in the following calculations.

When the upper diffracted beam $L_{U1}$ is emitted perpendicularly to the upper surface $101\ell$ of the transparent substrate $100\ell$, for example, $\theta_{D3}$ is equal to zero in the equation (26). Accordingly, the following equation is obtained from the equations (26) and (29):

$$\sin(\theta_1 - \theta_g) = 0 \quad (30)$$

Therefore

$$\theta_1 = \theta_g \quad (31)$$

When $\theta = 45°$, the following values are obtained from the equations (25) and (28).

$$\theta_0 = 41.51° \quad (32)$$
$$\theta_1 + \theta_g = 138.48° \quad (33)$$

Since $\theta_1 = \theta_g$,

$$\theta_g = \theta_1 = \theta_2 = 69.24° \quad (34)$$

Meanwhile, when the following equaiton is satisfied, the difraction occurs in the diffraction grating layer $400\ell$ under the Bragg condition:

$$d_4 = \lambda/(2n_4 \cos\theta_1) \quad (35)$$

By substituting $\lambda = 0.6328$ $\mu$m , $n_4 = 1.6$, and $\theta_1 = 69.24°$ in the equation (35), the interval $d_4$ is found to be 0.558 $\mu$m.

In short, when $\theta_g = 69.24°$, $d_4 = 0.558$ $\mu$m, and $\theta = 45°$, the upper diffracted beam $L_{U1}$ is emitted perpendicularly to the surface of the transparent substrate.

Incidentally, the thickness $D_4$ of the diffraction grating layer $400\ell$ is determined according to the discriminant (24) where the value of the parameter Q is no less than ten for the three dimensional hologram. The value of the thickness $D_4$ is found to be 1.253 $\mu$m by substituting $Q = 10$ in the equation (24). Thus the thickness $D_4$ of the diffraction grating layer $400\ell$ is no less than 1.253 $\mu$m. However, the smaller the thickness $D_4$ is, the better, on account of the loss because of absorption of light in the diffraction grating layer $400\ell$.

In order to make the intensities of the upper diffracted beams $L_{U1}$ and $L_{U2}$ produced at the total reflection positions $A_1$ and $A_2$, the diffraction efficiency at the second total reflection position $A_2$ is made higher than that of the total reflection position $A_1$. The diffraction efficiency of the three dimensional hologram depends on a difference of a refractive index at the interference fringes. Therefore if exposure with laser beams are controlled so that parts of the diffraction grating layer $400\ell$ positioned at the total reflection positions $A_1$ and $A_2$ have respective refractive indexes different from each other, the intensities of the upper diffracted beams $L_{U1}$ and $L_{U2}$ are made equal to each other.

In general, the diffraction efficiency of the three dimensional hologram can be higher than that of the two dimensional hologram (theoretically it can be up to 100%). Therefore the incident beam $L_{I0}$ is utilized more efficiently with the three dimensional hologram.

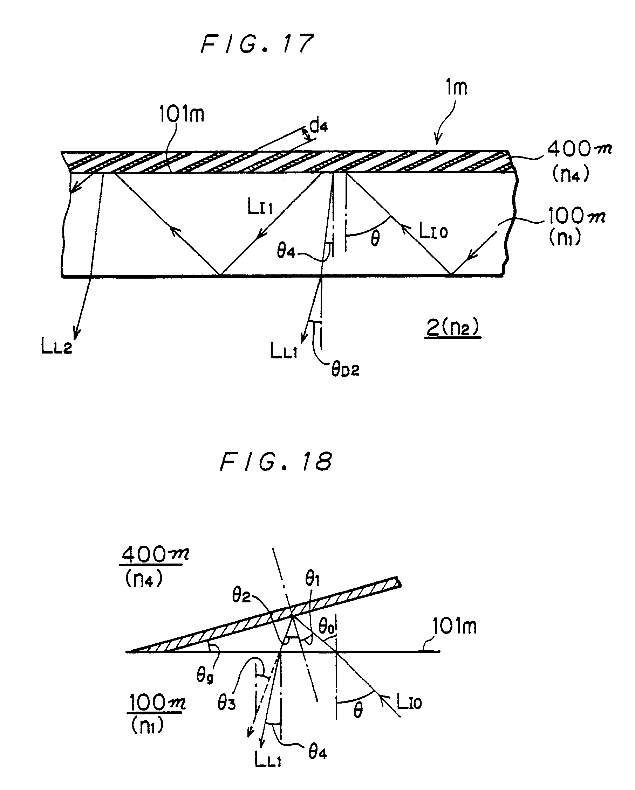

Fig. 17 is a sectional view showing a beam splitter 1m of a reflection type having a diffraction grating of a three dimensional hologram. The beam splitter 1m comprises a transparent substrate 100m and a diffraction grating layer 400m formed on the upper surface 101m of the substrate 100M. Fig. 18 schematically illustrates a light path in the vicinity of the surface 101m, in the same manner as Fig. 16. The following equations hold with respect to Figs. 17 and 18:

$$n_1 \sin\theta = n_4 \sin\theta_0 \qquad (36)$$
$$n_1 \sin\theta_4 = n_4 \sin\theta_3 \qquad (37)$$
$$n_2 \sin\theta_{D2} = n_1 \sin\theta_4 \qquad (38)$$
$$\theta_1 = \theta_2 \qquad (39)$$
$$\theta_0 = \theta_1 + \theta_g \qquad (40)$$
$$\theta_3 = \theta_1 - \theta_g \qquad (41)$$

where $\theta_4$ is an angle beween the lower diffracted beam in the transparent substate 100m and a normal of the surface 101m, and the other variables are defined in the same manner as the variables in the equations (25)-(29).

When the lower diffracted bem $L_{L1}$ is emitted perpecdicularly to the transparent substrate 100m, $\theta_{D2}$ is equal to zero. From the equations (37) and (38), we obtain

$$\sin\theta_3 = 0 \qquad (42)$$

Therefore, $\theta_1 = \theta_g$ from the equation (41). When $\theta = 45°$, we obtain from the equation (36)

$$\theta_0 = 41.52° \qquad (43)$$

From the equation (40)

$$\theta_g = \theta_1 = \theta_2 = 20.76° \qquad (44)$$

The value of the interval $d_4$ of the interference fringes is given as follows on account of the Bragg condition:

$$d_4 = \lambda/(2n_4 \cos\theta_1) \qquad (45)$$

In short, if $\theta_g = 20.76°$, $d_4 = 0.211$ $\mu m$, and $\theta = 45°$, the lower diffracted beam $L_{L1}$ is emitted perpendicularly to the substrate.

Another type of an element other than the prism for introducing incident light can be used. For example, a prism can be fixed over a substrate with a small gap between them; consequently incident light can be introduced according to a prism coupling method. The prism coupling method is described in Hiroshi Nishihara et. al., "Hikari-Shuseki-Kairo(Integrated Optical Circuits)," (Ohmusha company, 1985), page 237, for example. Instead, a grating such as a three-dimensional hologram, through which incident light can be introduced, may be formed on a surface of a substrate. The three-dimensional hologram is described in Takanori Okoshi, "Hoarogurafi(Holography)," (korona-sha, 1977), page 20, for example.

The element for introducing incident light can be integral with a substrate. Fig. 15 illustrates a beam splitter whose end portion is cut diagonally to its surfaces 101k and 102k to form a receiving surface 300k for incident light $L_{I0}$.

Moreover, the diffraction grating can be formed through electron beam scanning, laser beam scanning, or ion beam etching instead of the interference method using laser beams described above.

The beam splitter 1, 1a, 1b, 1c, 1h, 1$\ell$ and 1m shown in Figs. 2, 3, 5, 6, 11, 15 and 17, respectively, can be utilized as described in U.S.Pat. No. 4,125,864, for example.

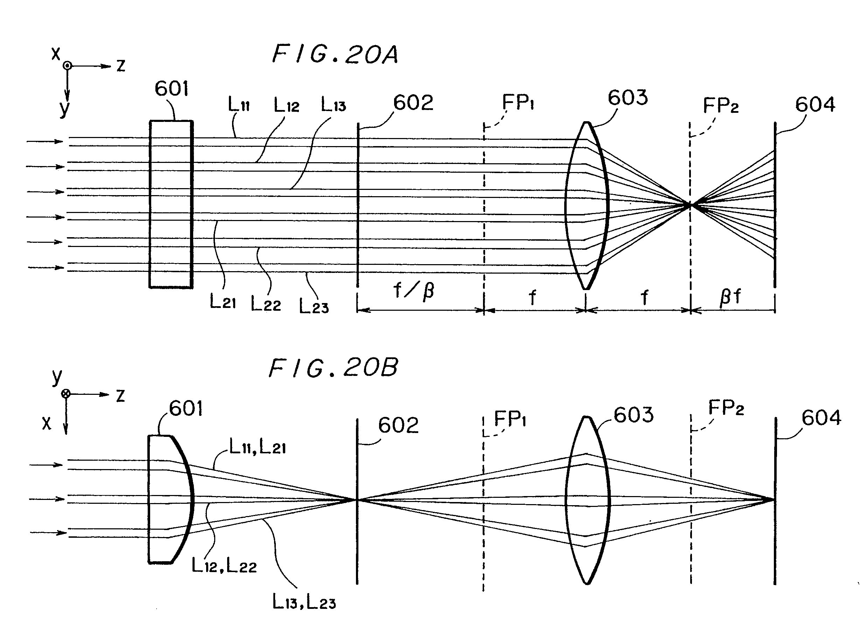

The beam splitting system 10 shown in Figs. 7, 8A and 8B can be installed in a multibeam scanner. Figs. 20A and 20B are a plan view and a front view showing an optical system for focusing multibeams provided in the multibeam scanner. Fig. 20 illustrates an array of multibeams $L_{11}$-$L_{13}$ and $L_{21}$-$L_{23}$. The optical system comprises a cylindrical lens 601, an intermediate image surface 602, a relay lens 603, and an exposure surface 604. The intermediate image surface 602 is positioned at a focal surface of the cylindrical lens 601. Figs. 20A and 20B show focal surfaces $FP_1$ and $FP_2$ of the relay lens 603. A distance betweeen the intermediate image surface 602 and the relay lens 603 is equal to summation of a focal length f of the relay lens 603 and the focal length f divided by a magnification $\beta$. A distance betweeen the relay lens 603 and the exposure surface 604 is equal to summation of the focal length f and the focal length f multiplied by the magnification $\beta$. The parallel multibeams pass through the cylindrical lens 601 to be converged in a direction x on the intermediate image surface 602. Beam spots of the multibeams have a shape of a line on the intermediate image surface 602 accordingly. The multibeams are converged by the relay lens 603 in a direction y on the focal surface $FP_2$ and converged in the direction x on the exposure surface 604. Thus the exposure surface 604 is exposed with plural beam spots which are lined up in the y direction.

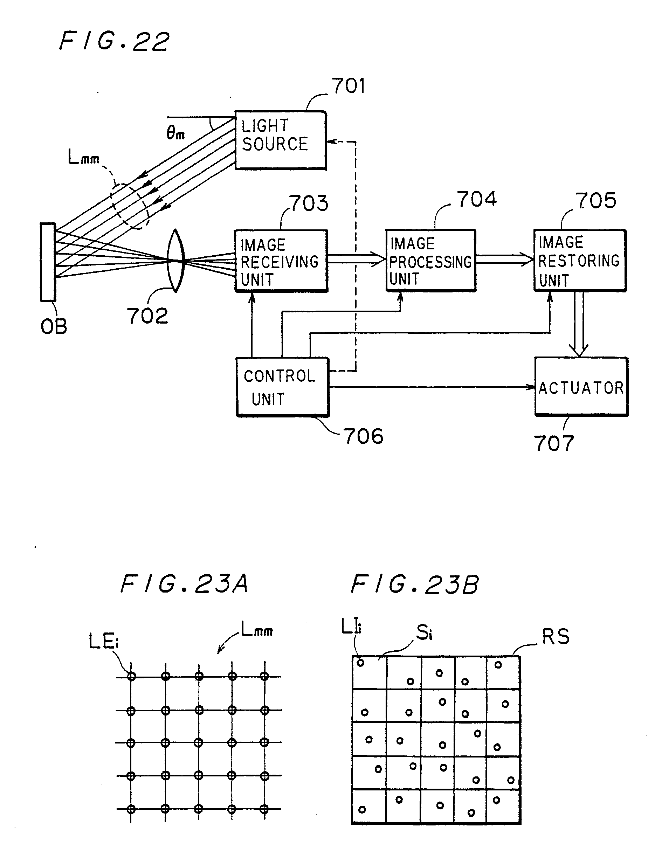

The beams splitting system 10 can be also utilized as a light source in an apparatus for identifying a shape of an object. Fig. 22 is a schematic block diagram showing the structure of the shape identifying apparatus. This shape identifying apparatus comprises a light source 701, an image forming lens 702, an image receiving unit 703, an image processing unit 704, an image restoring unit 705, a control unit 706, and an actuator 707. The light source includes the beam splitting system 10 and emits multi-laser-beams $L_{mm}$ at an angle $\theta_m$ to a certain reference axis. The multibeams $L_{mm}$ are incident on an object OB, and diffusely reflected on its surface. The reflected beams pass through the image forming lens 702 to be received by the image receiving unit 703. The image receiving unit 703 includes a two-dimensional image sensor, such as a two-dimensional CCD, for producing image information on the basis of intensity and arrangement of the multibeams. Since the positional relation between the light source 701 and the two-dimensional image sensor is fixed, each position of the multibeams on a receiving surface of the two-dimensional image sensor depends on the three-dimensional shape of the surface of the object OB. The shape identifying apparatus identifies the shape of the surface of the object OB on the basis of the angle $\theta_m$, emitting-positions of the multibeams in the light source 701, and the receiving-positions of the multibeams in the two-dimensional image sensor.

The image processing unit 704 eliminates noise components in the image information produced in the image receiving unit 703 to obtain receiving-position information of the multibeams. The image processing unit 704 further performs pairing of emitting-position information obtained at the light source and the receiving-position information. For example, the light source 701 emits each beam at a different timing from each other, and a receiving-position of each beam received at a particular time is paired to an emitting-position of a beam emitted at the same timing.

If the surface of the object OB is flat and the array of emitting beams remains similar to that of received beams, the pairing is performed as follows. Fig. 23A illustrates an array of the multibeams emitted from the light source 701, and Fig. 23B illustrates a receiving surface RS of the two-dimensional image sensor. The receiving surface RS is divided into segment areas $S_i$, each of which receives one of the multibeams. Since a emitted beam $LE_i$ is always received at a corresponding segment $S_i$, a beam $LI_i$ received at a segment $S_i$ is paired to the emitted beam $LE_i$.

The image restoring unit 705 produces information on the three-dimensional shape of the object OB on the basis of the positional information and pairing information.

The actuator 707 may perform various types of applications of the shape information. For example, it may display the shape of the object OB, or judge whether the object OB is a defective piece or not.

The beam splitter 1a shown in Fig. 3, for example, has the diffraction grating whose diffraction efficiency value is constant, whereby the intensities of the respective beams $L_{L1}$ and $L_{L2}$ ($L_{U1}$ and $L_{U2}$)

decrease step by step in the order of diffracting. The beam splitter 1f shown in Fig. 9 can produce a plurality of the beams $L_{L1}$-$L_{L4}$ ($L_{U1}$-$L_{U4}$) whose intensity distribtion on an object to be illuminated is constant by providing the step portions 103-106 as described before, in which the intervals of the beams $L_{L1}$-$L_{L4}$ ($L_{U1}$-$L_{U4}$) are adjusted according to their intensity decrease ratio. When the beam splitter 1f is installed in a lighting system, the lighting system can attain uniform illuminance distribution. Similarly, a heating system provided with the beam splitter 1f can attain uniform temperature distribution of an object.

Moreover, pitches of outgoing beams from the beam splitter 1f can be adjusted by changing the thicknesses of the substrate 100f, as described before. The beam splitter 1f may be therefore utilized as a part of an apparatus for drawing or processing a fixed pattern, such as a bar code.

According to the present invention, an incident light beam is reflected in a transparent layer, and the internal reflected beam is diffracted at a surface of the transparent layer on which a diffraction grating is formed. As a result, a plurality of diffracted beams can be produced from a single incident beam. Since a diffracted grating is easier to form than multi-layers, the beam splitter according to the present invention is easier to fabricate than a current one.

Although the present invention has been described and illustrated in detail, it is clearly understood that the same is by way of illustration and example only and is not to be taken by way of limitation. The spirit and scope of the present invention should be limited only by the terms of the appended claims.

The features disclosed in the foregoing description, in the claims and/or in the accompanying drawings may, both separately and in any combination thereof, be material for realising the invention in diverse forms thereof.

## Claims

1. A beam splitter comprising:
a transparent layer,
an introduction member for introducing a light beam into said transparent layer, said light beam being totally reflected in said transparent layer, and a diffraction grating formed on at least a part of a surface of said transparent layer, at which part said light beam is totally reflected, said diffraction grating diffracting said light beam to produce a plurality of diffracted beams going out of said transparent layer.

2. A beam splitter in accordance with claim 1, wherein

said transparent layer has a first flat surface on which said diffraction grating is formed and a second flat surface which is parallel to said first flat surface.

3. A beam splitter in accordance with claim 2, wherein
said introduction member is a prism of a triangle pole attached to said transparent layer.

4. A beam splitter in accordance with claim 2, further comprising another diffraction grating formed on at least a part of said second flat surface, at which part said light beam is totally reflected.

5. A beam splitter in accordance with claim 2, further comprising a reflecting layer formed on at least a part of said second flat surface where said plurality of diffracted beams are to pass through.

6. A beam splitter in accordance with claim 2, wherein
said light beam is reflected and diffracted at a plural positions of said first flat surface, and a diffraction efficiency value of said diffraction grating differs at respective plural positions of said first flat surface.

7. A beam splitter in accordance with claim 6, wherein
said diffraction efficiency value is so arranged that intensity values of said diffracted beams produced at respective plural positions of said first flat surface are equal to each other.

8. A beam splitter in accordance with claim 2 further comprising an element for controlling propagation of said diffracted beam fixed on at least a part of said second flat surface where said plurality of diffracted beams are to pass through.

9. A beam splitter in accordance with claim 8, wherein
said element is a liquid chrystal element.

10. A beam splitter in accordance with claim 2, wherein
said diffraction grating is made of a photosensitive material coated on said transparent layer.

11. A beam splitter in accordance with claim 2, wherein
said introduction member is fixed with said transparent layer and, said light beam is incident on a flat surface of said introduction member which is inclined to said first and second flat surfaces.

12. A beam splitter in accordance with claim 1, wherein
said transparent layer has a flat surface on which said diffraction grating is formed, and a stepwise surface each step of which is parallel to said flat surface.

13. A beam splitter in accordance with claim 1, wherein
said transparent layer has a first flat surface on which said diffraction grating is formed, and a second flat surface inclined to said first flat surface.

14. A beam splitter in accordance with claim 1, wherein
said transparent layer has a flat surface on which said diffraction grating is formed and a curved surface opposite to said flat surface, where curvature of said curved surface is so established that diffracted beams emitted outside from said diffraction grating converge at a point.

15. A beam splitting system comprising:
(a) a first beam splitter comprising:
a first transparent layer,
a first introduction member for introducing a light beam into said first transparent layer, said light beam being totally reflected in said first transparent layer, and
a first diffraction grating formed on at least a part of a surface of said first transparent layer, at which part said light beam is totally reflected, said first diffraction grating diffracting said light beam to produce first diffracted beams parallel to each other, which are lined up and which go out of said first transparent layer; and
(b) a second beam splitter comprising:
a second transparent layer,
a second introduction member for introducing said first diffracted beams into said second transparent layer, said first diffracted beams being totally reflected in said second transparent layer, and
a second diffraction grating formed on at least a part of a surface of said second transparent layer, at which part said first diffracted beams are totally reflected, said second diffraction grating diffracting said first diffracted beams to produce second diffracted beams parallel to each other, which are arrayed in a manner of lattice points of a two-dimensional lattice and which go out of said second transparent layer.

16. A beam splitter in accordance with claim 2, wherein
said first flat surface of said transparent layer is formed into said diffraction grating.

17. A beam splitter in accordance with claim 2, wherein
an end portion of said transparent layer is formed into said introduction member, and said light beam is incident on a third flat surface of said end portion which is inclined to said first and second flat surfaces.

# FIG. 1

FIG.2

FIG.3

FIG.4

FIG.5

# F I G. 6

2

# F I G. 7

# FIG.8A

# FIG.8B

F I G . 9

F I G . 10

# FIG. 11

# FIG. 12

## F I G . 13

Lu2        Lu1

1i

200a

100a

102a    501    Lio

502        300a

LL2        LL1

## F I G . 14

1j

200j

100j

EP 0 386 643 A2

*F I G . 15*

*F I G . 16*

## FIG. 17

## FIG. 18

FIG.19

FIG.21

FIG.20A

FIG.20B

*F I G. 22*

LIGHT SOURCE 701

θm

Lmm

OB

702

IMAGE RECEIVING UNIT 703

IMAGE PROCESSING UNIT 704

IMAGE RESTORING UNIT 705

CONTROL UNIT 706

ACTUATOR 707

*F I G. 23A*

LEi

Lmm

*F I G. 23B*

LIi    Si    RS